# EUROPÄISCHE PATENTSCHRIFT

(11) **EP 1 312 532 B1**
(45) Veröffentlichungstag und Bekanntmachung des Hinweises auf die Patenterteilung: **18.08.2004**
(21) Anmeldenummer: 02025382.9
(22) Anmeldetag: 14.11.2002
(51) Int. Cl.: B62D 1/18

(54) **Einstellbare Lenksäule**
Adjustable steering column
Colonne de direction réglable

(30) Priorität: 19.11.2001 DE 10156327
(43) Veröffentlichungstag der Anmeldung: 21.05.2003
(73) Patentinhaber: ZF Lenksysteme GmbH, 73527 Schwäbisch Gmünd (DE)
(72) Erfinder: Budaker, Martin, 73540 Heubach (DE); Seitz, Gerhard, 73529 Schwäbisch Gmünd-Rechberg (DE)

(56) Entgegenhaltungen:
- EP-A- 0 345 101

## Beschreibung

Die Erfindung geht von der Gattung aus, wie im unabhängigen Anspruch 1 angegeben und in EP 345101 oder DE 195 45 438 A1 beschrieben.

Das mechanische Feststellen (Festklemmen) einer Lenksäule in der vom Fahrer gewünschten Position erfolgt üblicherweise über ein Schraubengetriebe, über Kipphebel oder nach dem Prinzip der Schiefen Ebene (Keilwirkung). Nachteilig ist dabei, dass die Klemmkraft von Hand aufgebracht werden muss. Folglich ist sie stark personenbezogen, so dass die Klemmsicherheit nur bedingt gegeben ist. Weiterhin kann es durch Setzen der Bauteile zu einem Lösen der Arretierung im Fahrbetrieb kommen.

Bei der pneumatischen Betätigung wird die Klemmkraft von einer Druckfeder oder Tellerfeder generiert und über Hebel oder nach dem Prinzip der schiefen Ebene verstärkt.
Zum Lösen der Klemmkraft / Arretierung wird die Vorspannkraft der Druck- bzw. Tellerfeder über einen druckluftbetätigten Kolben (Druckluftzylinder) aufgehoben.
Nachteil: Hohe Teilezahl, teuer.

### Vorteile der Erfindung

Der Anmeldungsgegenstand mit den Merkmalen des Anspruches 1 hat folgenden Vorteil: Er beinhaltet eine robuste, kostengünstige und funktionssichere Arretiervorrichtung für die Betätigung von Hand oder pneumatisch oder elektromagnetisch, insbesondere elektromotorisch.

Vorteilhafte Weiterbildungen der Erfindung sind in den abhängigen Ansprüchen angegeben, deren Merkmale auch, soweit sinnvoll, miteinander kombiniert werden können.

### Zeichnungen

Ausführungsbeispiele der Erfindung sind in den Zeichnungen dargestellt und im Folgenden näher erläutert.
Schematisch ist gezeigt in
- Figur 1:: ein Lagerbock mit Führungsblechen eines Führungsteiles für eine einstellbare Lenksäule nach der Erfindung,
- Figur 2:: ein modifizierter Ausschnitt aus Figur 1,
- Figur 3:: eine weitere Modifikation.

Im Wesentlichen gleiche Teile in unterschiedlichen Figuren sind mit gleichen Bezugszeichen versehen.

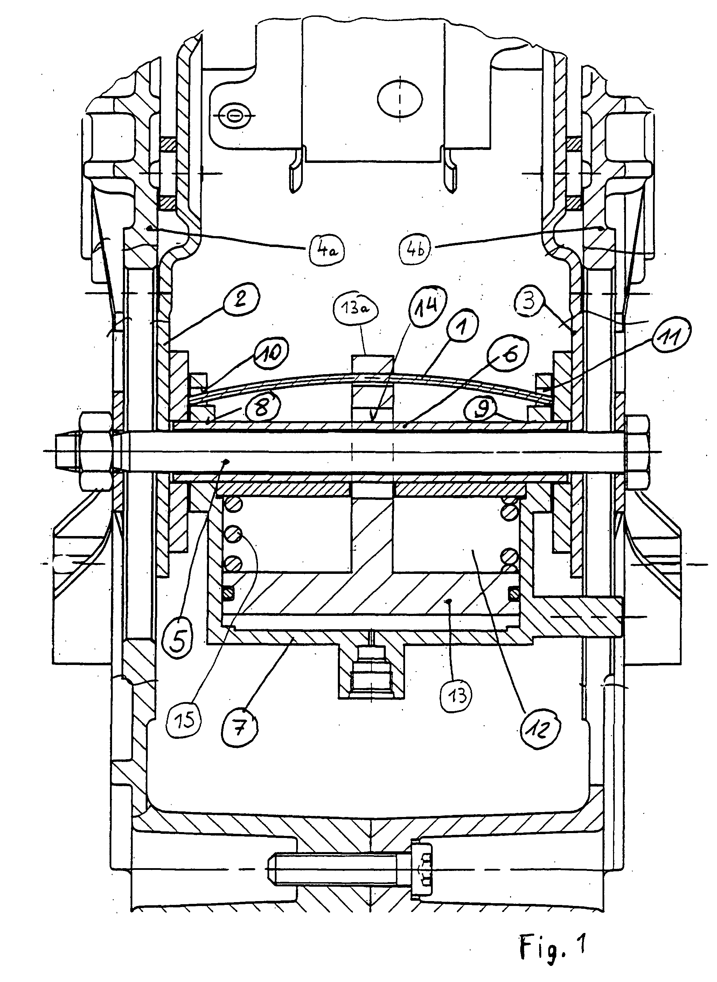

In Figur 1 befinden sich zwischen Seitenteilen 4a, 4b eines Lagerbockes, der mit einer nicht dargestellten Fahrerkabine verschraubbar ist, Führungsbleche 2, 3 eines Führungsteiles, mit dessen Hilfe ein nicht dargestellter Abschnitt einer Lenksäule geführt werden kann. Das Seitenteil 4a bildet mit dem Führungsblech 2 eine erste Feststell-Kupplung. Das Seitenteil 4b bildet mit dem Führungsblech 3 eine weitere Feststell-Kupplung. Die beiden Feststell-Kupplungen liegen einander gegenüber. Zwischen den beiden einander entsprechenden und unterschiedlichen Feststell-Kupplungen angehörenden, medialen Kupplungsteilen 2, 3 ist als Druckelement eine Biegefeder angeordnet, nämlich eine auf Knickung vorgespannte Blattfeder 1. Diese dient als Kraftquelle für eine Klemmkraft, wie sie zum Schließen der Feststell-Kupplung benötigt wird.
Die. Blattfeder 1 spannt die Führungsbleche 2 und 3 gegen die Seitenteile 4a bzw. 4b des Lagerbockes, welche die jeweils äußeren Kupplungsteile der beiden Feststell-Kupplungen bilden.
Diese beiden einander entsprechenden äußeren Kupplungsteile 4a, 4b sind durch ein Zugelement miteinander verbunden, nämlich durch eine Schraube 5, die zur Abstützung der von der Blattfeder 1 generierten Klemmkraft (Spreizkraft) dient.

Dadurch ist es möglich, dass der Lagerbock weniger stabil und somit kostengünstig ausgeführt werden kann.

Gleichzeitig dient die Schraube 5 als Aufnahme für ein Führungsrohr 6 und (über das Führungsrohr 6) für ein pneumatisches Zylindergehäuse 7 eines Druckluftzylinders 12. Das Zylindergehäuse 7 ist so ausgeführt , dass es in Bohrungen 8, 9 das Führungsrohr 6 aufnimmt und in Langlöchern 10, 11 die Enden der Blattfeder 1 aufnimmt.

Wird der Druckluftzylinder 12 mit Fluid (hier: Druckluft) beaufschlagt, so wird, wie aus Figur 1 zu erkennen ist, ein Kolben 13 über seine Kolbenstange 13a die Blattfeder 1 durchbiegen. Dadurch verkürzt sich die Wirklänge der Blattfeder ("komprimierter Zustand" der Blattfeder) und die Arretierung durch die Feststell-Kupplungen wird aufgehoben - das Führungsteil 2, 3 für die Lenksäule kann verstellt werden.

Wird der Druck im Druckluftzylinder 12 abgebaut, so federt die Blattfeder 1 in ihre entspannte Lage zurück ("expandierter Zustand" der Blattfeder), und das Führungsteil für die Lenksäule ist wieder durch die Feststell-Kupplungen arretiert.

Über eine zusätzliche Feder (Druckfeder 15) kann die Klemmkraft der Blattfeder 1 verstärkt werden, so dass die Blattfeder 1 schwächer dimensioniert werden kann.
Ein weiterer Vorteil der Druckfeder 15 ist, dass in Klemmposition alle Bauteile durch die Druckfeder gegeneinander verspannt sind und so im Fahrbetrieb keine Klappergeräusche auftreten. Ein Anschlag 14 sorgt dabei dafür, dass die Blattfeder nicht in die entgegengesetzte Richtung ausknickt.

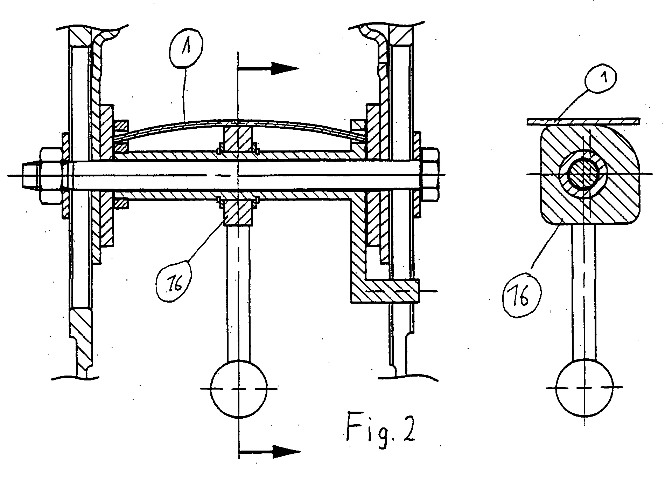

Figur 2 zeigt eine mögliche Lösung für eine handbetätigte Arretierung.
Die Blattfeder 1 dient auch hier als Druck- und Klemmelement.
Über einen Exzenterhebel 16 wird die Arretierung gelöst: Beim Betätigen des Exzenterhebels wird die Blattfeder in bekannter Weise durchgebogen.

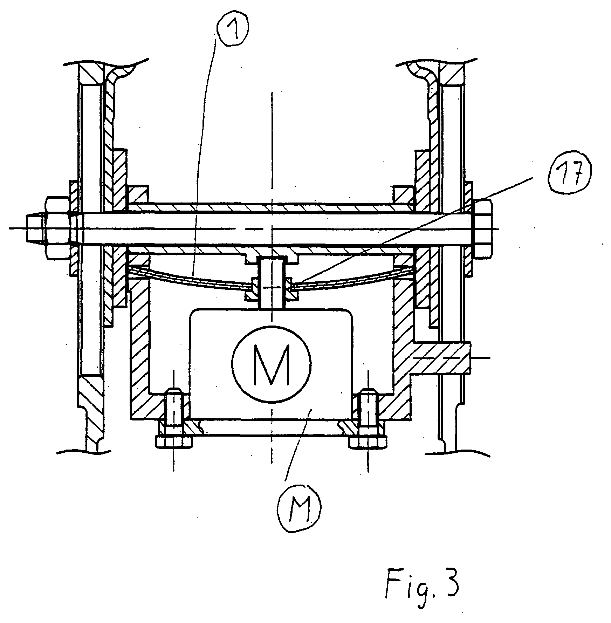

Figur 3 zeigt eine mögliche elektromotorische Lösung. Ein E-Motor M betätigt in bekannter Weise die Blattfeder 1 über ein Schraubengetriebe 17.

## Patentansprüche

1. Einstellbare Lenksäule mit zwei einander gegenüber liegenden Feststell-Kupplungen mit jeweils zwei miteinander in Kontakt bringbaren Kupplungsteilen, wobei zwischen den beiden einander entsprechenden und unterschiedlichen Feststell-Kupplungen angehörenden, medialen Kupplungsteilen (2, 3) ein Druckelement (1) angeordnet ist, während die beiden anderen, einander entsprechenden äußeren Kupplungsteile (4a, 4b) durch ein Zugelement (5) miteinander verbunden sind,
**gekennzeichnet durch folgende Merkmale:**
a) das Druckelement besteht aus einer Biegefeder (1), die mit einander gegenüber liegenden Enden in einem expandierten Zustand die medialen Kupplungsteile (2, 3) voneinander weg und in Richtung auf die zugehörigen äußeren Kupplungsteile (4a, 4b) drückt, während in einem komprimierten Zustand der Abstand zwischen den Enden **durch** Biegen verkürzt ist,
b) zwischen den Enden greift eine Betätigungseinrichtung (7, 12, 13, 13a) an, mit der sich einerseits das Biegen zum Lösen der Feststell-Kupplung und andererseits **durch** Verringerung des Biegens das Kuppeln der Feststell-Kupplung bewirken lässt.

2. Einstellbare Lenksäule nach Anspruch 1, **dadurch gekennzeichnet, dass** die Betätigungseinrichtung (7, 12, 13, 13a) durch ein Fluid angetrieben ist.

3. Einstellbare Lenksäule nach Anspruch 1, **dadurch gekennzeichnet, dass** die Betätigungseinrichtung elektromagnetisch angetrieben ist.

4. Einstellbare Lenksäule nach einem der Ansprüche 1 bis 3, **dadurch gekennzeichnet, dass** die Biegefeder eine Blattfeder (1) ist.

5. Einstellbare Lenksäule nach einem der Ansprüche 1 bis 4, **dadurch gekennzeichnet, dass** die Biegefeder (1) im entspannten Zustand ihren expandierten Zustand einnimmt.

6. Einstellbare Lenksäule nach einem der Ansprüche 1 bis 5, **dadurch gekennzeichnet, dass** eine weitere Feder (15) vorgesehen ist, welche die Biegefeder (1) in den expandierten Zustand drängt.

## Claims

1. Adjustable steering column having two locating couplings which are arranged opposite one another and each have two coupling parts which can be brought into contact with one another, a pressure element (1) being arranged between the two mutually corresponding medial coupling parts (2, 3) belonging to different locating couplings, while the other two mutually corresponding outer coupling parts (4a, 4b) are connected to one another by a tension element (5),
**characterized by** the following features:
a) the pressure element comprises a torsion spring (1) which, by means of mutually opposite ends, in an expanded state pushes the medial coupling parts (2, 3) away from one another and in the direction of the associated outer coupling parts (4a, 4b), while in a compressed state the distance between the ends is shortened by bending,
b) engaging between the ends is an actuating device (7, 12, 13, 13a) configured to produce bending for releasing the locating coupling and to produce coupling of the locating coupling by reducing the bending.

2. Adjustable steering column according to Claim 1, wherein the actuating device (7, 12, 13, 13a) is driven by a fluid.

3. Adjustable steering column according to Claim 1, wherein the actuating device is driven electromagnetically.

4. Adjustable steering column according to any of Claims 1 to 3, wherein the torsion spring is a leaf spring (1).

5. Adjustable steering column according to any of Claims 1 to 4, wherein, in the released state, the torsion spring (1) assumes its expanded state.

6. Adjustable steering column according to any of Claims 1 to 5, **characterized in that** a further spring (15) is provided which forces the torsion spring (1) into the expanded state.

## Revendications

1. Colonne de direction réglable comprenant deux accouplements de blocage en regard l'un de l'autre avec à chaque fois deux parties d'accouplement pouvant être amenées en contact mutuel, un élément de pression (1) étant disposé entre les deux parties d'accouplement (2, 3) médiales, se correspondant mutuellement et appartenant à différents accouplements de blocage, tandis que les deux autres parties d'accouplement (4a, 4b) extérieures, se correspondant mutuellement, sont connectées l'une à l'autre par le biais d'un élément de traction (5),
**caractérisée par les caractéristiques suivantes :**
a) l'élément de pression se compose d'un ressort à flexion (1) qui presse, avec ses extrémités opposées, dans un état étiré, les parties d'accouplement médiales (2, 3) à l'écart l'une de l'autre et dans la direction des parties d'accouplement extérieures associées (4a, 4b), tandis que dans un état comprimé, la distance entre les extrémités est raccourcie par flexion,
b) entre les extrémités vient en prise un dispositif d'actionnement (7, 12, 13, 13a) avec lequel la flexion peut être provoquée pour desserrer l'accouplement de blocage et d'autre part, par réduction de la flexion, l'engagement de l'accouplement de blocage peut être provoqué.

2. Colonne de direction réglable selon la revendication 1, **caractérisée en ce que** le dispositif d'actionnement (7, 12, 13, 13a) est entraîné par un fluide.

3. Colonne de direction réglable selon la revendication 1, **caractérisée en ce que** le dispositif d'actionnement est entraîné par voie électromagnétique.

4. Colonne de direction réglable selon l'une quelconque des revendications 1 à 3, **caractérisée en ce que** le ressort de flexion est un ressort à lames (1).

5. Colonne de direction réglable selon l'une quelconque des revendications 1 à 4, **caractérisée en ce que** le ressort de flexion (1) adopte dans l'état détendu son état étiré.

6. Colonne de direction réglable selon l'une quelconque des revendications 1 à 5, **caractérisée en ce que** l'on prévoit un ressort supplémentaire (15) qui contraint le ressort de flexion (1) dans l'état étiré.
